# EUROPEAN PATENT SPECIFICATION

(11) **EP 2 917 280 B1**
(45) Date of publication and mention of the grant of the patent: **23.12.2020**
(21) Application number: 13798762.4
(22) Date of filing: 08.11.2013
(51) Int. Cl.: C08L 71/12, C08L 33/20

(54) **POLY(PHENYLENE ETHER) COMPOSITION AND ARTICLE**
POLY(PHENYLENETHER)-ZUSAMMENSETZUNG UND ARTIKEL
COMPOSITION DE POLY(OXYDE DE PHÉNYLÈNE) ET ARTICLE CORRESPONDANT

(30) Priority: 09.11.2012 US 201213673160
(43) Date of publication of application: 16.09.2015
(73) Proprietor: SABIC Global Technologies B.V., 4612 PX Bergen op Zoom (NL)
(72) Inventor: SHARMA, Kirti, NL-4612 PX Bergen op Zoom (NL); TAKAMURA, Norihiro, Moka Tochigi 321-4392 (JP)
(74) Representative: Lang, Johannes
(86) International application number: PCT/IB2013/060018
(87) International publication number: WO 2014/072955

(56) References cited:
- EP-A2- 0 359 469
- WO-A1-2013/158405
- WO-A2-2013/025340
- US-A- 4 360 618
- US-A1- 2003 119 953
- US-A1- 2005 228 131
- US-A1- 2009 269 659
- US-B1- 6 262 166

## Description

### BACKGROUND OF THE INVENTION

Poly(phenylene ether)s are a class of plastics known for excellent water resistance, dimensional stability, and inherent flame retardancy, as well as high oxygen permeability and oxygen/nitrogen selectivity. Properties such as strength, stiffness, chemical resistance, and heat resistance can be tailored by blending poly(phenylene ether)s with various other plastics in order to meet the requirements of a wide variety of consumer products, for example, plumbing fixtures, electrical boxes, automotive parts, and insulation for wire and cable.

Blends of poly(phenylene ether)s and rubber-modified polystyrenes are commercially available and used for injection molding impact-resistant articles such as housings for appliances and consumer electronics. To reduce waste and conserve energy, it would be useful to prepare blends of poly(phenylene ether)s and rubber-modified polystyrenes using a recycled rubber-modified polystyrene. U.S. Patent No. 5,264,487 to Scobbo et al. describes a plastic composition that includes a poly(phenylene ether) and a polystyrene, and further includes an acrylonitrile-butadiene-styrene copolymer and a copolymer of an olefin such as ethylene and an epoxy compound such as glycidyl methacrylate. The poly(phenylene ether), polystyrene, and acrylonitrile-butadiene-styrene copolymer can be provided in the form of a mixed recycling stream. However, the poor compatibility of the acrylonitrile-butadiene-styrene copolymer with the poly(phenylene ether) and polystyrene requires the use of the olefin-epoxy copolymer as a compatibilizer. It would be desirable to avoid the complexity and expense of using such a compatibilizer.

U.S. Patent No. 7,964,675 to Ko et al. describes a plastic composition that includes a recycled poly(phenylene ether) and another recycled plastic that can be, among others, acrylonitrile-butadiene-styrene copolymer. The composition minimizes or eliminates any recycled plastic that can decompose and form volatile components during formation of the plastic composition. The Ko composition maximizes use of recycled feedstocks, however, its physical and flame retardancy properties are not sufficient for some injection molding applications. There therefore remains a need for blends of poly(phenylene ether)s and rubber-modified polystyrenes that utilize a recycled plastic feedstock while largely preserving the physical and flame retardancy properties exhibited by blends prepared from virgin resins. Poly(phenylene ether) compositions containing recovered polystyrene are also disclosed in US-A-2003/019953 to Ebisawa et al.

### BRIEF SUMMARY OF EMBODIMENTS OF THE INVENTION

### DETAILED DESCRIPTION OF THE INVENTION

The present inventor has determined that a blend of poly(phenylene ether) and recycled rubber-modified polystyrene that largely preserves the physical and flame retardancy properties exhibited by blends prepared from virgin resins. Specifically, the blend is a composition according to the present claims that comprises 32 to 46 weight percent of a poly(phenylene ether) having an intrinsic viscosity of 0.2 to 0.35 deciliter per gram, measured at 25 °C in chloroform; 30 to 49 weight percent of a post consumer recycled rubber-modified polystyrene; as described in the present claims 13 to 19 weight percent of an organophosphate ester; and 0.2 to 1.5 weight percent of polymerized acrylonitrile residue; wherein combustion of 100 parts by weight of the composition in air produces 0.1 to 3 parts by weight ash. The polymerized acrylonitrile residue can be derived from acrylonitrile copolymers present as contaminants in the recycled rubber-modified polystyrene. Similarly, the ash formed on combustion of the composition can be derived from titanium dioxide present as a contaminant in the recycled rubber-modified polystyrene.

The composition exhibits properties that are useful for molding large, thin parts that are heat resistant and impact resistant. Thus, in some embodiments, the composition exhibits a melt viscosity of less than or equal to 75 pascal-seconds, specifically 50 to 75 pascal-seconds, determined according to ISO 11443 at 282 °C and a shear rate of 1,500 second⁻¹; and a heat deflection temperature of at least 75 °C, specifically 75 to 85 °C, determined according to ISO 75/f at a load of 1.8 megapascals; and a notched Izod impact strength of at least 3.5 kilojoules/meter², specifically 3.5 to 5.5 kilojoules/meter², determined according to ISO 180/1A at 23 °C.

In some embodiments, the composition further exhibits at least one of a melt volume flow rate of at least 35 centimeter³/10 minutes, specifically 35 to 50 centimeter³/10 minutes, determined according to ISO 1133:2005 at 280 °C using a 2.16 kilogram load; a Vicat softening temperature of at least 95 °C, specifically 95 to 107 °C, determined according to ISO 306:2004 using Method B/120; and a rating of V-0 or V-1 in the UL 94 20 mm Vertical Burn Test at a sample thickness of 1.5 millimeters.

In some embodiments, the composition exhibits a melt volume flow rate of at least 30 centimeter³/10 minutes, determined according to ISO 1133:2005 at 280 °C using a 2.16 kilogram load; and a notched Izod impact strength of at least 5 kilojoules/meter², determined according to ISO 180/1A at 23 °C; and a rating of V-0 or V-1 in the UL 94 20 mm Vertical Burn Test at a sample thickness of 1.5 millimeters.

The composition comprises a poly(phenylene ether). Suitable poly(phenylene ether)s include those comprising repeating structural units having the formula 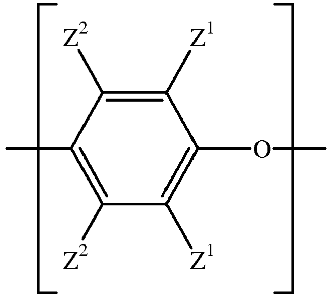 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a 3,5-dimethyl-1,4-phenyl group with the di-n-butylamine component of an oxidative polymerization catalyst.

The poly(phenylene ether) has an intrinsic viscosity of 0.2 to 0.35 deciliter per gram measured at 25 °C in chloroform. Intrinsic viscosity can be measured by Ubbelohde viscometer. Within the range of 0.2 to 0.35, the poly(phenylene ether) intrinsic viscosity can be 0.25 to 0.35 deciliter per gram. In some embodiments, the poly(phenylene ether) has a weight average molecular weight less than or equal to 55,000 atomic mass units.

In some embodiments, the poly(phenylene ether) used to prepare the composition comprises or consists of a "virgin" poly(phenylene ether), which means that it is an as-produced poly(phenylene ether), as contrasted with a recycled poly(phenylene ether) or a poly(phenylene ether) that has undergone significant thermal processing. Compared to a recycled poly(phenylene ether), a virgin poly(phenylene ether) will generally possess lower concentrations of poly(phenylene ether) rearrangement products, such as bridging products and branching products. For example, a virgin poly(2,6-dimethyl-1,4-phenylene ether) will generally possess less than 100 parts per million by weight of the bridging fragment below 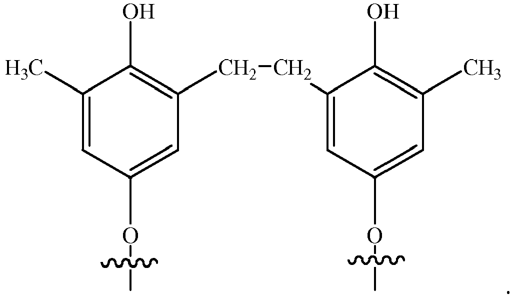 As another example, a virgin poly(2,6-dimethyl-1,4-phenylene ether) will generally possess less than 100 parts per million by weight of the branching fragment below: 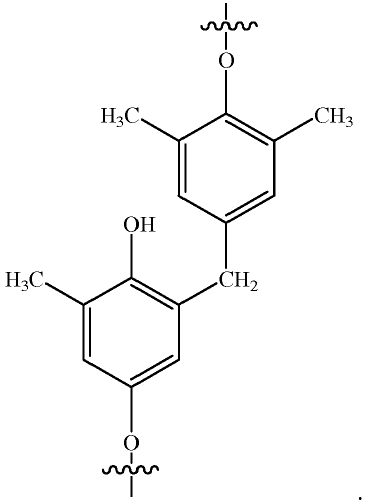 These fragments can be identified and quantified by carbon nuclear magnetic resonance spectroscopy.

In some embodiments, the poly(phenylene ether) is essentially free of incorporated diphenoquinone residues. In this context, "essentially free" means that the less than 1 weight percent of poly(phenylene ether) molecules comprise the residue of a diphenoquinone. As described in U.S. Patent No. 3,306,874 to Hay, synthesis of poly(phenylene ether) by oxidative polymerization of monohydric phenol yields not only the desired poly(phenylene ether) but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(phenylene ether) (i.e., the diphenoquinone is incorporated into the poly(phenylene ether) structure) by heating the polymerization reaction mixture to yield a poly(phenylene ether) comprising terminal or internal diphenoquinone residues). For example, when a poly(phenylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(phenylene ether) with terminal and internal residues of incorporated diphenoquinone. However, such reequilibration reduces the molecular weight of the poly(phenylene ether). Accordingly, when a higher molecular weight poly(phenylene ether) is desired, it may be desirable to separate the diphenoquinone from the poly(phenylene ether) rather than reequilibrating the diphenoquinone into the poly(phenylene ether) chains. Such a separation can be achieved, for example, by precipitation of the poly(phenylene ether) in a solvent or solvent mixture in which the poly(phenylene ether) is insoluble and the diphenoquinone is soluble. For example, when a poly(phenylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with 1 to 4 volumes of methanol or a methanol/water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the reequilibration of the diphenoquinone into the poly(phenylene ether) chain can be minimized (e.g., by isolating the poly(phenylene ether) no more than 200 minutes after termination of oxidative polymerization). These approaches are described in U.S. Patent No. 8,025,158 B2 to Delsman et al. In an alternative approach utilizing the temperature-dependent solubility of diphenoquinone in toluene, a toluene solution containing diphenoquinone and poly(phenylene ether) can be adjusted to a temperature of 25°C, at which diphenoquinone is poorly soluble but the poly(phenylene ether) is soluble, and the insoluble diphenoquinone can be removed by solid-liquid separation (e.g., filtration).

In some embodiments, the poly(phenylene ether) comprises 2,6-dimethyl-1,4-phenylene ether units, 2,3,6-trimethyl-1,4-phenylene ether units, or a combination thereof. In some embodiments, the poly(phenylene ether) comprises a poly(2,6-dimethyl-1,4-phenylene ether). In some embodiments, the poly(phenylene ether) comprises a poly(2,6-dimethyl-1,4-phenylene ether) having an intrinsic viscosity of 0.25 to 0.35 deciliter per gram, measured at 25°C in chloroform.

The poly(phenylene ether) can comprise molecules having aminoalkyl-containing end group(s), typically located in a position ortho to the hydroxyl group. The poly(phenylene ether) can be in the form of a homopolymer, a copolymer, a graft copolymer, an ionomer, or a block copolymer, as well as combinations comprising at least one of the foregoing.

The composition comprises the poly(phenylene ether) in an amount of 32 to 46 weight percent, based on the total weight of the composition. In some embodiments, the poly(phenylene ether) amount is 36 to 46 weight percent, specifically 40 to 46 weight percent. In other embodiments, the poly(phenylene ether) amount is 32 to 42 weight percent, specifically 34 to 40 weight percent.

In addition to the poly(phenylene ether), the composition comprises a rubber-modified polystyrene.

As further described below, the rubber-modified polystyrene is provided as a post-consumer recycled material. Such post-consumer recycled materials are commercially available as, for example, PS01 3028 from Axion Polymers. When the rubber-modified polystyrene is provided as a post-consumer recycled material, the amount of rubber-modified polystyrene in the composition will account for the purity of the recycled material. For example, if a composition incorporates 40 weight percent of a post-consumer recycled rubber-modified polystyrene that is 90% pure, then the composition contains 36% rubber-modified polystyrene.

In some embodiments, virgin rubber-modified polystyrene is used alone or in combination with recycled rubber-modified polystyrene. Suitable virgin rubber-modified polystyrenes are commercially available as, for example, HIPS3190 from SABIC Innovative Plastics, and PS3450 from Total Petrochemicals.

The composition comprises the rubber-modified polystyrene in an amount of 30 to 49 weight percent, based on the total weight of the composition. In some embodiments, the amount of rubber-modified polystyrene is 39 to 49 weight percent, specifically 40 to 47 weight percent, more specifically 41 to 47 weight percent. In other embodiments, the amount of rubber-modified polystyrene is 30 to 40 weight percent, specifically 30 to 36 weight percent.

The composition comprises at least 30 weight percent of post-consumer recycled rubber-modified polystyrene, based on the total weight of the composition.

In addition to the poly(phenylene ether) and the rubber-modified polystyrene, the composition comprises an organophosphate ester. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), and combinations thereof.

In some embodiments the organophosphate ester comprises a bis-aryl phosphate having the formula 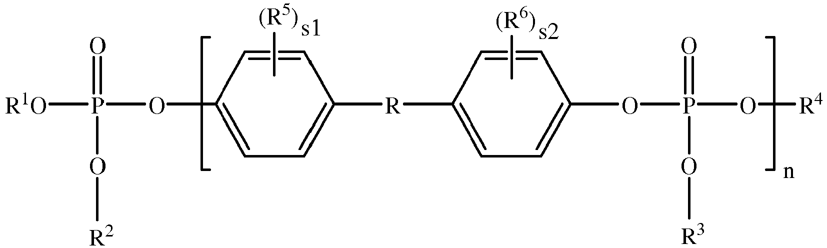 wherein R is independently at each occurrence a C₁-C₁₂ alkylene group; R⁵ and R⁶ are independently at each occurrence a C₁-C₅ alkyl group; R¹, R², and R⁴ are independently a C₁-C₁₂ hydrocarbyl group; R³ is independently at each occurrence a C₁-C₁₂ hydrocarbyl group; n is 1 to 25; and s1 and s2 are independently an integer equal to 0, 1, or 2. In some embodiments OR¹, OR², OR³ and OR⁴ are independently derived from phenol, a monoalkylphenol, a dialkylphenol, or a trialkylphenol.

As readily appreciated by one of ordinary skill in the art, the bis-aryl phosphate is derived from a bisphenol. Exemplary bisphenols include 2,2-bis(4-hydroxyphenyl)propane (bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In some embodiments, the bisphenol comprises bisphenol A.

The composition comprises the organophosphate ester in an amount of 13 to 19 weight percent, specifically 15 to 19 weight percent, based on the total weight of the composition.

In some embodiments, the composition further comprises one or more additional flame retardants, including metal dialkylphosphinates (e.g., aluminum tris(diethylphosphinate), nitrogen-containing flame retardants (e.g., melamine phosphate, melamine pyrophosphate, melamine, polyphosphate, melamine cyanurate), metal hydroxides (e.g., magnesium hydroxide), and combinations thereof. When present, such additional flame retardants can be used in an amount of up to 10 weight percent, specifically up to 5 weight percent, based on the total weight of the composition. In some embodiments, the flame retardant consists of the organophosphate ester.

In addition to the poly(phenylene ether), the rubber-modified polystyrene, and the organophosphate ester, the composition comprises polymerized acrylonitrile residue. As used herein, the term "polymerized acrylonitrile residue" refers to the residue of polymerized acrylonitrile in the form of acrylonitrile homopolymers and copolymers. In other words, polymerized acrylonitrile residue refers to the sum of all polymer repeat units having the structure

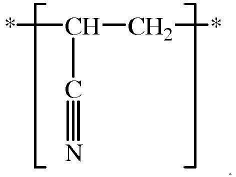

The rubber-modified polystyrene and the polymerized acrylonitrile residue are provided in the form of a post-consumer recycled rubber-modified polystyrene that comprises as impurities styrene-acrylonitrile copolymer, acrylonitrile-butadiene-styrene copolymer, or a combination thereof. The polymerized acrylonitrile residue is in the form of an acrylonitrile copolymer selected from the group consisting of styrene-acrylonitrile copolymer, acrylonitrile-butadiene-styrene copolymer, and mixtures thereof. When present, styrene-acrylonitrile copolymer can be derived not only from an impurity within the post-consumer recycled rubber-modified polystyrene but also from an intentionally added drip retardant that is polytetrafluoroethylene encapsulated with styrene-acrylonitrile copolymer.

The weight percent of polymerized acrylonitrile residue in a composition can be determined either by ¹³C nuclear magnetic resonance spectroscopy (¹³C NMR) or by infrared spectroscopy. An illustrative procedure for determining weight percent of polymerized acrylonitrile by ¹³C NMR follows. Four hundred (400) milligrams of a polymer blend composition are dissolved in 4 milliliters deuterated chloroform containing 15 milligrams per milliliter chromium tris(acetylacetonate) as a spin-lattice relaxation agent. ¹³C NMR spectra are acquired on a Varian Mercury Plus 400 instrument operating at an observed frequency of 100.6 megahertz. The instrument is equipped with a 10 millimeter broadband probe. Spectra for all samples are collected under quantitative conditions. Gated decoupling using the WALTZ-16 pulse sequence was employed. The decoupler is gated off during the pulse delay to eliminate nuclear Overhauser effect (NOE) and to ensure complete relaxation of carbon nuclei between scans. Acquisition parameters include a pulse delay of 5 seconds and a 45° flip angle. Also, a 30.2 kilohertz spectral width and 30,000 (30K) data points result in a 1.00 second acquisition time. Data processing is carried out using NetNMRO software with 2 hertz line broadening and a polynomial baseline correction routine. Relative to a carbon chemical shift of 77.0 ppm for deuterated chloroform, the chemical shift for the nitrile carbon of polyacrylonitrile is in the range 117.40 to 122.15 ppm. By repeating the experiment with varying amounts of added pure polyacrylonitrile, the polyacrylonitrile content of the polymer blend can be determined.

The composition comprises the polymerized acrylonitrile residue in an amount of 0.2 to 1.5 weight percent, based on the total weight of the composition. Within this range, the polymerized acrylonitrile residue amount can be 0.25 to 1 weight percent, specifically 0.3 to 0.8 weight percent. Polymerized acrylonitrile residue amounts less than 0.2 weight percent are difficult to obtain when using recycled rubber-modified polystyrene, because styrene-acrylonitrile copolymer, acrylonitrile-butadiene-styrene copolymer, and their mixtures are used in many of the same consumer products as rubber-modified polystyrene. And polymerized acrylonitrile residue amounts greater than 1.5 weight percent are generally associated with styrene-acrylonitrile copolymer and/or acrylonitrile-butadiene-styrene copolymer amounts that are detrimental to the physical properties and/or flame retardancy of the composition.

Combustion of 100 parts by weight of the composition in air produces 0.1 to 3 parts by weight ash, specifically 0.2 to 2.5 parts by weight ash, more specifically 0.5 to 2.3 parts by weight ash. Ash content can be determined, for example, by subjecting a known weight of the composition to 600 °C in air in an oven for two hours. The ash content of the combusted composition is generally associated with inorganic fillers or pigments. For example, titanium dioxide is commonly used as a pigment for plastics used in consumer appliances, and titanium dioxide is therefore a common contaminant in post-consumer recycled rubber-modified polystyrene. In some embodiments, the composition comprises 0.06 to 1.5 weight percent titanium, specifically 0.12 to 1.2 weight percent titanium, wherein the titanium can be in any chemical form in the composition, but the titanium amount is expressed as weight percent elemental titanium. When combustion of 100 parts by weight of the composition in air produces more than 3 parts by weight ash, the impact resistance of the composition can be adversely affected.

In some embodiments, the composition further comprises 0.5 to 5 weight percent, specifically 1 to 3 weight percent, of a polystyrene-polybutadiene-polystyrene triblock copolymer, based on the total weight of the composition. Illustrative commercially polystyrene-polybutadiene-polystyrene triblock copolymers include those available from Kraton Performance Polymers Inc. under the trade names KRATON D1101 and KRATON D1102.

In some embodiments, the composition further comprises 0.1 to 1 weight percent of polypropylene, based on the total weight of the composition. Polypropylene can be a contaminant in post-consumer recycled rubber-modified polystyrene. Because of its poor compatibility with poly(phenylene ether) and the polystyrene component of rubber-modified polystyrene, polypropylene amounts greater than 1 weight percent can adversely affect the impact resistance of the composition.

In some embodiments, the composition further comprises 0.5 to 5 weight percent mineral oil. Mineral oil can be a contaminant or intentionally added component of post-consumer recycled rubber-modified polystyrene. When present at greater than 5 weight percent, mineral oil can adversely affect the heat resistance of the composition.

The composition can, optionally, further comprise one or more additives known in the thermoplastics art. For example, the composition can, optionally, further comprise an additive chosen from stabilizers, mold release agents, lubricants, flow promoters, processing aids, drip retardants, nucleating agents, UV blockers, dyes, pigments, antioxidants, anti-static agents, blowing agents, mineral oil, metal deactivators, antiblocking agents, and the like, and combinations thereof. When present, such additives are typically used in a total amount of less than or equal to 5 weight percent, specifically less than or equal to 4 weight percent, more specifically less than or equal to 3 weight percent, based on the total weight of the composition. Particularly useful additives include black pigment, which can be used in an amount of 0.1 to 1 weight percent, based on the total weight of the composition.

The composition does not require the compatibilizing olefin-epoxy copolymer of U.S. Patent No. 5,264,487 to Scobbo et al. As a result, the composition need not comprise the secondary aliphatic hydroxyl groups that are formed on reaction of the epoxy groups of the Scobbo compatibilizing copolymer. Specifically, in some embodiments the composition comprises 0 to 120 parts per million by weight, specifically 0 to 100 parts per million by weight, of secondary aliphatic hydroxyl groups. In some embodiments, the composition excludes secondary aliphatic hydroxyl groups. The amount of secondary aliphatic hydroxyl groups can be determined by carbon nuclear magnetic resonance spectroscopy.

The composition can, optionally, exclude polymers not described herein as required or optional. For example, in some embodiments the composition comprises 0 to 1 weight percent of a polyamide. The polyamide amount can be less than or equal to 0.5 weight percent, specifically less than or equal to 0.1 weight percent. In some embodiments, the composition excludes polyamide. In some embodiments, the composition comprises 0 to 2 weight percent of a polyolefin. The polyolefin amount can be less than or equal to 1 weight percent, specifically less than or equal to 0.5 weight percent. In some embodiments, the composition excludes polyolefin. In some embodiments, the composition comprises 0 to 1 weight percent of a polyester. The polyester amount can be less than or equal to 0.5 weight percent, specifically less than or equal to 0.1 weight percent. In some embodiments, the composition excludes polyester.

In some embodiments, the composition minimizes or excludes reinforcing fillers, such as glass fibers. For example, the composition can comprise reinforcing fillers in an amount of 0 to 1 weight percent, specifically 0 to 0.1 weight percent, based on the total weight of the composition. In this context, it will be understood that titanium dioxide is not a reinforcing filler.

In some embodiments, the composition minimizes or eliminates halogens. For example, the composition can comprise halogens in an amount of 0 to 0.1 weight percent, specifically 0 to 0.01 weight percent, based on the total weight of the composition.

In a very specific embodiment of the composition, the poly(phenylene ether) comprises a poly(2,6-dimethyl-1,4-phenylene ether); the composition comprises 34 to 40 weight percent of the poly(phenylene ether); the poly(phenylene ether) has an intrinsic viscosity of 0.25 to 0.35 deciliter per gram, measured at 25 °C in chloroform; said rubber-modified polystyrene as described in the claims comprises 80 to 96 weight percent polystyrene and 4 to 20 weight percent polybutadiene, based on the weight of the rubber-modified polystyrene; the composition comprises 40 to 47 weight percent of the rubber-modified polystyrene; the composition comprises 14 to 19 weight percent of the organophosphate ester; the composition comprises 0.06 to 3 weight percent titanium; and the rubber-modified polystyrene and the polymerized acrylonitrile residue and the titanium are provided in the form of a post-consumer recycled rubber-modified polystyrene. In some embodiments, the rubber-modified polystyrene comprises 9 to 17 weight percent of virgin rubber-modified polystyrene and 25 to 34 weight percent of post-consumer recycled rubber-modified polystyrene.

In another very specific embodiment of the composition, the poly(phenylene ether) comprises a poly(2,6-dimethyl-1,4-phenylene ether); the composition comprises 40 to 46 weight percent of the poly(phenylene ether); the poly(phenylene ether) has an intrinsic viscosity of 0.25 to 0.35 deciliter per gram, measured at 25 °C in chloroform; said rubber-modified polystyrene as described in the claims comprises 80 to 96 weight percent polystyrene and 4 to 20 weight percent polybutadiene, based on the weight of the rubber-modified polystyrene; the composition comprises 30 to 36 weight percent of the rubber-modified polystyrene; the composition comprises 16 to 20 weight percent of the organophosphate ester; the composition comprises 0.06 to 3 weight percent titanium; the composition further comprises 0.5 to 4 weight percent of a polystyrene-polybutadiene-polystyrene triblock copolymer; and the rubber-modified polystyrene and the polymerized acrylonitrile residue and the titanium are provided in the form of a post-consumer recycled rubber-modified polystyrene. In some embodiments, the rubber-modified polystyrene consists of post-consumer recycled rubber-modified polystyrene.

The composition can be prepared by melt blending the components. The melt-blending can be performed using common equipment such as ribbon blenders, Henschel mixers, Banbury mixers, drum tumblers, single-screw extruders, twin-screw extruders, multi-screw extruders, co-kneaders, and the like. For example, the present composition can be prepared by melt-blending the components in a twin-screw extruder at a temperature of 270 to 310 °C, specifically 280 to 300 °C.

The composition is useful for forming articles. Suitable methods of forming such articles include single layer and multilayer sheet extrusion, injection molding, blow molding, film extrusion, profile extrusion, pultrusion, compression molding, thermoforming, pressure forming, hydroforming, vacuum forming, and the like. Combinations of the foregoing article fabrication methods can be used. The composition is particularly useful for injection molding large, thin articles, such as the back panels of flat-screen televisions and trays for printed circuit boards. For example, the molded articles can have a first dimension of at least 50 centimeters, a second dimension of at least 50 centimeters, and a third dimension of less than or equal to 5 millimeters. In some embodiments, injection molding conditions include a barrel temperature of 250 to 350 °C, specifically 270 to 310 °C, and a mold temperature of 50 to 100 °C, specifically 55 to 90 °C. Illustrative injection molding conditions are described in the working examples below.

In a very specific embodiment of the article, the poly(phenylene ether) comprises a poly(2,6-dimethyl-1,4-phenylene ether); the composition comprises 34 to 40 weight percent of the poly(phenylene ether); the poly(phenylene ether) has an intrinsic viscosity of 0.25 to 0.35 deciliter per gram, measured at 25 °C in chloroform; said rubber-modified polystyrene as described in the claims comprises 80 to 96 weight percent polystyrene and 4 to 20 weight percent polybutadiene, based on the weight of the rubber-modified polystyrene; the composition comprises 40 to 47 weight percent of the rubber-modified polystyrene; the composition comprises 14 to 19 weight percent of the organophosphate ester; the composition comprises 0.06 to 3 weight percent titanium; and the rubber-modified polystyrene and the polymerized acrylonitrile residue and the titanium are provided in the form of a post-consumer recycled rubber-modified polystyrene. In some embodiments, the rubber-modified polystyrene comprises 9 to 17 weight percent of virgin rubber-modified polystyrene and 25 to 34 weight percent of post-consumer recycled rubber-modified polystyrene.

In another very specific embodiment of the article, the poly(phenylene ether) comprises a poly(2,6-dimethyl-1,4-phenylene ether); the composition comprises 40 to 46 weight percent of the poly(phenylene ether); the poly(phenylene ether) has an intrinsic viscosity of 0.25 to 0.35 deciliter per gram, measured at 25 °C in chloroform; said rubber-modified polystyrene as described in the claims comprises 80 to 96 weight percent polystyrene and 4 to 20 weight percent polybutadiene, based on the weight of the rubber-modified polystyrene; the composition comprises 30 to 36 weight percent of the rubber-modified polystyrene; the composition comprises 16 to 20 weight percent of the organophosphate ester; the composition comprises 0.06 to 3 weight percent titanium; the composition further comprises 0.5 to 4 weight percent of a polystyrene-polybutadiene-polystyrene triblock copolymer; and the rubber-modified polystyrene and the polymerized acrylonitrile residue and the titanium are provided in the form of a post-consumer recycled rubber-modified polystyrene. In some embodiments, the rubber-modified polystyrene consists of post-consumer recycled rubber-modified polystyrene.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES 1-14, COMPARATIVE EXAMPLES 1-3

Compositions were prepared using the components summarized in Table 1.

**Table 1**

| Component | Description |
|---|---|
| PPE | Poly(2,6-dimethyl-1,4-phenylene ether), CAS Reg. No. 24938-67-8, having an intrinsic viscosity of about 0.3 deciliter per gram as measured in chloroform at 25°C; obtained as a virgin material as PPO 808 from SABIC Innovative Plastics. |
| HIPS | High-impact polystyrene (rubber-modified polystyrene), CAS Reg. No. 9003-55-8, having a volume average particle diameter of 2.4 micrometers, a rubber content of 10 weight percent, a mineral oil content of less than 1 weight percent, obtained as a virgin material as PS3450 from Total Petrochemicals. |
| PCR HIPS | High-impact polystyrene derived from post-consumer recycling, including about 96-97 weight percent rubber-modified polystyrene, about 1.5-2.5 weight percent acrylonitrile-butadiene-styrene copolymer, about 0.7-1.5 weight percent styrene-acrylonitrile copolymer, and about 0.2-0.5 weight percent polypropylene; combustion of 100 parts by weight of the material for two hours at 600 °C in air product 2.1 parts by weight ash; obtained as PS01 3028 from Axion Polymers. |
| SBS | Polystyrene-polybutadiene-polystyrene triblock copolymer, CAS Reg. No. 9003-55-8, having a polystyrene content of 29-33 weight percent and a solution viscosity of about 4 Pascal-seconds measured at 25 °C in a 25 weight percent solution in toluene; obtained as Kraton D1101 from Kraton Performance Polymers Inc. |
| FP | Saturated polyalicyclic resin, CAS Reg. No. 69430-35-9, having a softening point of 120-130 °C, obtained as REGALITE R1125 from Eastman Chemical. |
| TSAN | Poly(styrene-acrylonitrile)-encapsulated polytetrafluoroethylene, containing 50 weight percent polytetrafluoroethylene; obtained as a virgin material as 449 Encapsulated PTFE from SABIC Innovative Plastics. |
| MgO | Magnesium oxide, CAS Reg. No. 1309-48-4; obtained as KYOWAMAG 150 from Kyowa Chemical Co. Ltd. or REMAG AC from Spaeter C. GmBH. |
| ZnS | Zinc sulfide, CAS Reg. No. 1314-98-3; obtained as SACHTOLITH HD-S from Sachtleben Chemie GmbH. |
| LLDPE | Linear low density polyethylene, CAS Reg. No. 25087-34-7, having a density of 0.925 grams per cubic centimeter and a melt volume-flow rate of about 20 cubic centimeters per 10 minutes at 190°C and 2.16 kilogram load; obtained as ESCORENE LL5100.09 from ExxonMobil. |
| Phosphite | Tris(2,4-di-tert-butylphenyl) phosphite, CAS Reg. No. 31570-04-4; obtained as IRGAFOS 168 from Ciba. |
| BPADP | Bisphenol A bis(diphenyl phosphate), CAS Reg. No. 181028-79-5; obtained as REOFOS BAPP from Chemtura Manufacturing UK Ltd. |
| Pigment black 7 | Pigment black 7, CAS Reg. No. 97793-37-8; obtained as MONARCH 800 from Cabot B.V. |

Compositions are summarized in Table 2, where component amounts are in weight percent based on the total weight of the composition.

Compositions were compounded on a Werner & Pfeiderer ZSK twin-screw extruder having a 28 millimeter internal diameter. The extruder was operated at 300 rotations per minute and a throughput of 20 kilograms/hour. The extruder utilized eight zones having temperatures of 180 °C / 210 °C / 220 °C / 260 °C / 260 °C / 260 °C / 240 °C / 240 °C from feed throat to die. The extrudate was cooled in a water bath, pelletized, and dried for 2 hours at 70 °C prior to use for injection molding. Test samples for physical property testing were injection molded on an Engel ES500 80 ton injection molding machine utilizing a barrel temperature of 250 °C and a mold temperature of 50 °C.

Physical properties are summarized in Table 2 and were evaluated as follows. Melt viscosity values, expressed in units of pascal-seconds, were determined according to ISO 11443 at 282 °C and a shear rate of 1,500 second⁻¹. Melt volume flow rate values, expressed in units of cubic centimeters per 10 minutes, were determined according to ISO 1133:2005 at 280 °C using a 2.16 kilogram load. Heat deflection temperature values, expressed in units of degrees centigrade, were determined according to ISO 75/f, using a bar having cross-sectional dimensions of 4 by 10 millimeters, a flat-wise test direction, a 64 millimeter support span, a load 1.82 megapascals, a heating rate of 2 °C/minute, and a deflection at reading of 0.34 millimeters; reported values reflect an average of two specimens per composition. Vicat softening temperature values, expressed in units of degrees centigrade, were determined according to ISO 306:2004 using Method B/120 and two specimens per composition. Notched Izod impact strength values, expressed in units of kilojoules/meter², were determined according to ISO 180:2000 at 23 °C using a hammer energy of 5.5 joules, bar cross-sectional dimensions of 4.0 millimeters by 10.0 millimeters, a notch angle of 45 degrees, a notch radius of 0.25 millimeters, an 8 millimeter depth of material under the notch, and five specimens per composition.

Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thickness of 1.5 millimeters were conditioned at 23 °C and 50% relative humidity for at least 48 hours. In the UL 94 20 mm Vertical Burning Flame Test, a set of five flame bars was tested. For each bar, a flame was applied to the bar then removed, and the time required for the bar to self-extinguish (first afterflame time, t1) was noted. The flame was then reapplied and removed, and the time required for the bar to self-extinguish (second afterflame time, t2) and the post-flame glowing time (afterglow time, t3) were noted. To achieve a rating of V-0, the afterflame times t1 and t2 for each individual specimen must have been less than or equal to 10 seconds; and the total afterflame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; but the cotton indicator can have been ignited by flaming particles or drops. Compositions not achieving a rating of V-2 were considered to have failed.

Combustion of 100 parts by weight of the Example 14 composition for 2 hours at 600 °C in air produced 1.9 parts by weight ash.

The property results show that the inventive examples each exhibit a melt viscosity less than or equal to 75 pascal-seconds, a heat deflection temperature of at least 75 °C, a Vicat softening temperature of at least 95 °C, and an Izod notched impact strength of at least 3.5 kilojoules/meter². Eleven of the thirteen inventive examples also exhibit a UL 94 rating of V-1 at 1.5 millimeter thickness. The inventive examples approach the performance of the comparative examples using virgin rubber-modified polystyrene rather than recycled rubber-modified polystyrene.

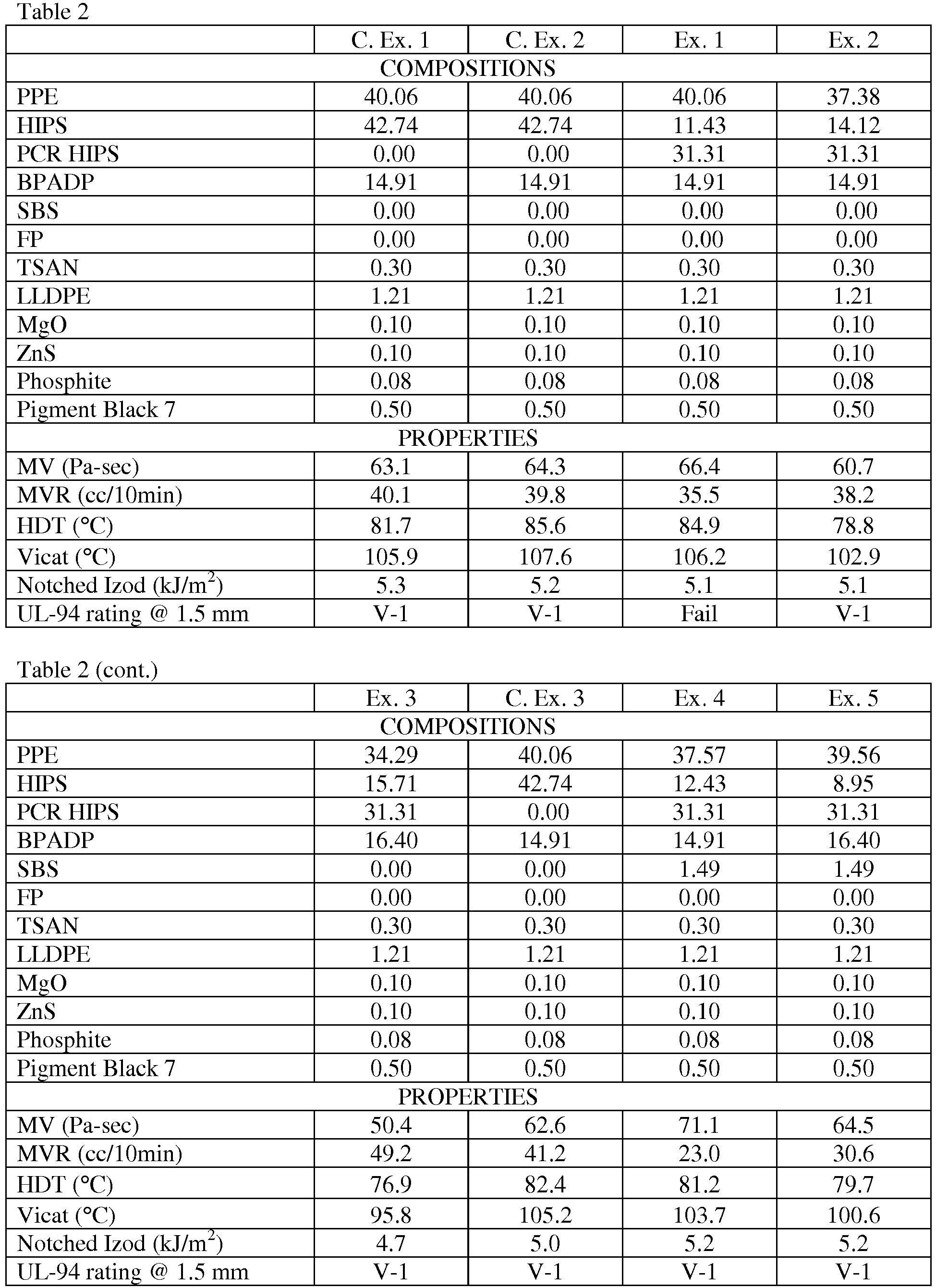

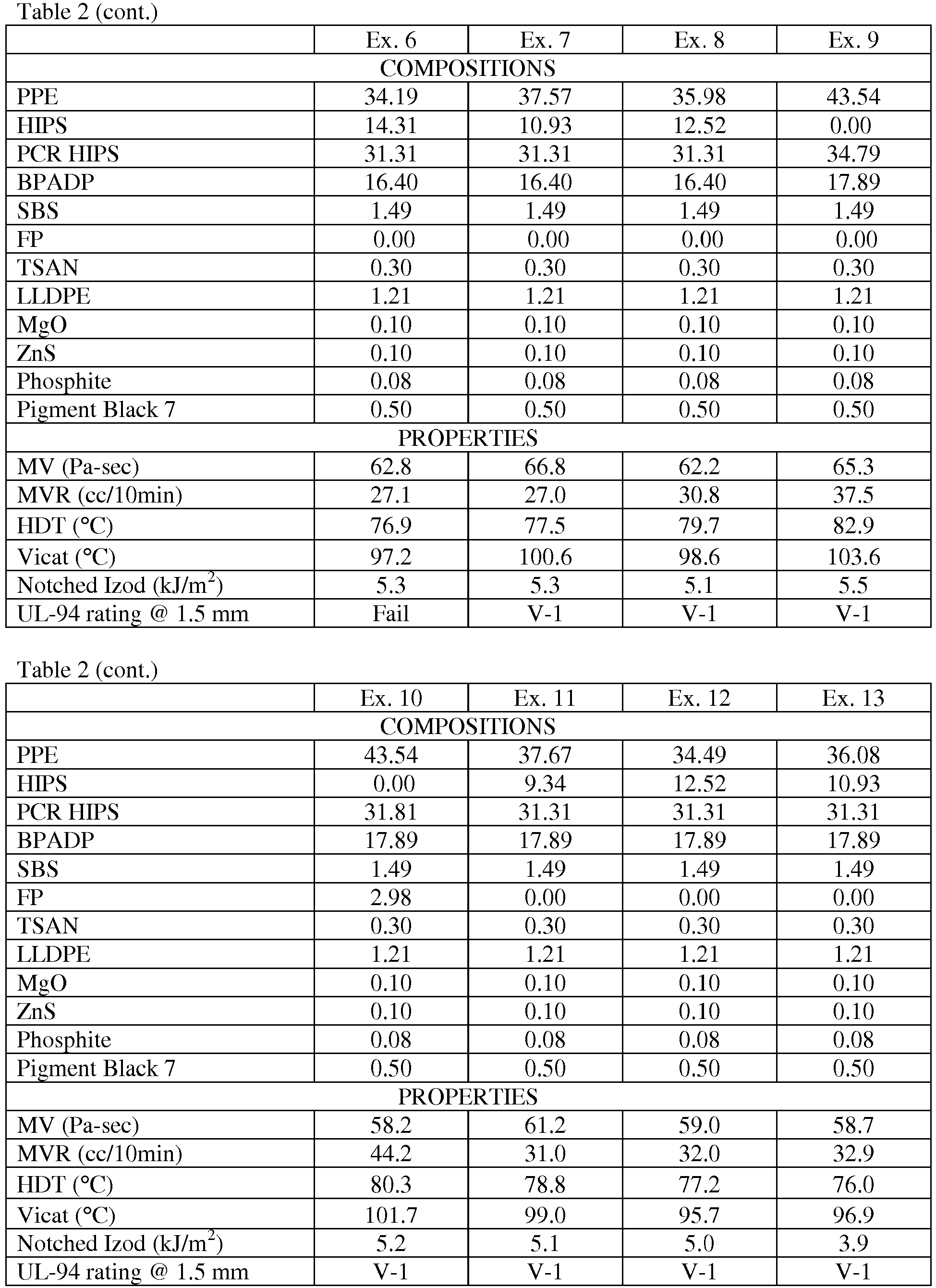

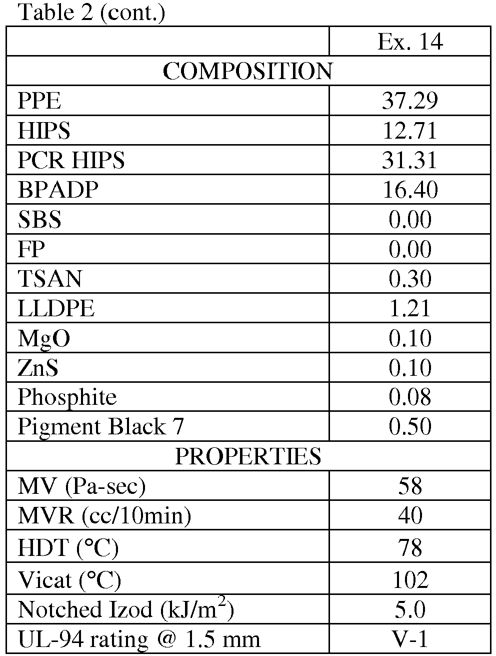

## Claims

1. A composition comprising:
32 to 46 weight percent of a poly(phenylene ether) having an intrinsic viscosity of 0.2 to 0.35 deciliter per gram, measured at 25 °C in chloroform;
30 to 49 weight percent of a rubber-modified polystyrene;
13 to 19 weight percent of an organophosphate ester; and
0.2 to 1.5 weight percent of polymerized acrylonitrile residue;
wherein the rubber-modified polystyrene and the polymerized acrylonitrile residue are provided in the form of a post-consumer recycled rubber-modified polystyrene comprising styrene-acrylonitrile copolymer, acrylonitrile-butadiene-styrene copolymer, or a mixture thereof; and
wherein combustion of 100 parts by weight of the composition in air produces 0.1 to 3 parts by weight ash ; wherein the amount of the polymerised acrylonitrile residue is determined by the C¹³ n.m.r. method disclosed in the present specification and the ash content is determined by combustion in air at 600°C for two hours as described in present specification.

2. The composition of claim 1, comprising at least 30 weight percent of the post-consumer recycled rubber-modified polystyrene.

3. The composition of any of claim 1 or 2, wherein the rubber-modified polystyrene comprises 80 to 96 weight percent polystyrene and 4 to 20 weight percent polybutadiene, based on the weight of the rubber-modified polystyrene.

4. The composition of any of claims 1-3, wherein the poly(phenylene ether) comprises virgin poly(phenylene ether).

5. The composition of any of claims 1-4, wherein the poly(phenylene ether) has a weight average molecular weight less than or equal to 55,000 atomic mass units.

6. The composition of any of claims 1-5, further comprising 0.06 to 1.5 weight percent titanium.

7. The composition of any of claims 1-6, further comprising 0.1 to 1 weight percent of polypropylene.

8. The composition of any of claims 1-7, further comprising 0.5 to 5 weight percent of a polystyrene-polybutadiene-polystyrene triblock copolymer.

9. The composition of claim 1,
wherein the poly(phenylene ether) comprises a poly(2,6-dimethyl-1,4-phenylene ether);
wherein the composition comprises 34 to 40 weight percent of the poly(phenylene ether);
wherein the poly(phenylene ether) has an intrinsic viscosity of 0.25 to 0.35 deciliter per gram, measured at 25 °C in chloroform;
wherein the rubber-modified polystyrene comprises 80 to 96 weight percent polystyrene and 4 to 20 weight percent polybutadiene, based on the weight of the rubber-modified polystyrene;
wherein the composition comprises 40 to 47 weight percent of the rubber-modified polystyrene;
wherein the composition comprises 14 to 19 weight percent of the organophosphate ester; and
wherein the composition comprises 0.06 to 3 weight percent titanium.

10. The composition of claim 1,
wherein the poly(phenylene ether) comprises a poly(2,6-dimethyl-1,4-phenylene ether);
wherein the composition comprises 40 to 46 weight percent of the poly(phenylene ether);
wherein the poly(phenylene ether) has an intrinsic viscosity of 0.25 to 0.35 deciliter per gram, measured at 25 °C in chloroform;
wherein the rubber-modified polystyrene comprises 80 to 96 weight percent polystyrene and 4 to 20 weight percent polybutadiene, based on the weight of the rubber-modified polystyrene;
wherein the composition comprises 30 to 36 weight percent of the rubber-modified polystyrene;
wherein the composition comprises 15 to 19 weight percent of the organophosphate ester;
wherein the composition comprises 0.06 to 3 weight percent titanium; and
wherein the composition further comprises 0.5 to 4 weight percent of a polystyrene-polybutadiene-polystyrene triblock copolymer.

11. An article comprising a composition comprising
32 to 46 weight percent of a poly(phenylene ether) having an intrinsic viscosity of 0.2 to 0.35 deciliter per gram, measured at 25 °C in chloroform;
30 to 49 weight percent of a rubber-modified polystyrene;
13 to 19 weight percent of an organophosphate ester; and
0.2 to 1.5 weight percent of polymerized acrylonitrile residue;
wherein the rubber-modified polystyrene and the polymerized acrylonitrile residue are provided in the form of a post-consumer recycled rubber-modified polystyrene comprising styrene-acrylonitrile copolymer, acrylonitrile-butadiene-styrene copolymer, or a mixture thereof; and
wherein combustion of 100 parts by weight of the composition in air produces 0.1 to 3 parts by weight ash ; wherein the amount of the polymerised acrylonitrile residue is determined by the C13 n.m.r. method disclosed in the present specification and the ash content is determined by combustion in air at 600°C for two hours as described in present specification.

12. The article of claim 11, comprising
a first dimension of at least 50 centimeters,
a second dimension of at least 50 centimeters, and
a third dimension of less than or equal to 5 millimeters.

13. The article of claim 11 or 12, wherein the article is a back panel of a flat screen television.

14. The article of any of claims 14 16 11-13,
wherein the poly(phenylene ether) comprises a poly(2,6-dimethyl-1,4-phenylene ether);
wherein the composition comprises 34 to 40 weight percent of the poly(phenylene ether);
wherein the poly(phenylene ether) has an intrinsic viscosity of 0.25 to 0.35 deciliter per gram, measured at 25 °C in chloroform;
wherein the rubber-modified polystyrene comprises 80 to 96 weight percent polystyrene and 4 to 20 weight percent polybutadiene, based on the weight of the rubber-modified polystyrene;
wherein the composition comprises 40 to 47 weight percent of the rubber-modified polystyrene;
wherein the composition comprises 14 to 19 weight percent of the organophosphate ester; and
wherein the composition comprises 0.06 to 3 weight percent titanium.

15. The article of any of claims 11-13,
wherein the poly(phenylene ether) comprises a poly(2,6-dimethyl-1,4-phenylene ether);
wherein the composition comprises 40 to 46 weight percent of the poly(phenylene ether);
wherein the poly(phenylene ether) has an intrinsic viscosity of 0.25 to 0.35 deciliter per gram, measured at 25 °C in chloroform;
wherein the rubber-modified polystyrene comprises 80 to 96 weight percent polystyrene and 4 to 20 weight percent polybutadiene, based on the weight of the rubber-modified polystyrene;
wherein the composition comprises 30 to 36 weight percent of the rubber-modified polystyrene;
wherein the composition comprises 15 to 19 weight percent of the organophosphate ester;
wherein the composition comprises 0.06 to 3 weight percent titanium; and
wherein the composition further comprises 0.5 to 4 weight percent of a polystyrene-polybutadiene-polystyrene triblock copolymer.

## Patentansprüche

1. Zusammensetzung, umfassend:
32 bis 46 Gewichtsprozent eines Poly(phenylenethers) mit einer intrinsischen Viskosität bzw. Grenzviskosität von 0,2 bis 0,35 Deziliter pro Gramm, gemessen bei 25 °C in Chloroform;
30 bis 49 Gewichtsprozent eines kautschukmodifizierten Polystyrols;
13 bis 19 Gewichtsprozent eines Organophosphatesters; und
0,2 bis 1,5 Gewichtsprozent eines polymerisierten Acrylnitril-Rückstands;
wobei das kautschukmodifizierte Polystyrol und der polymerisierte Acrylnitril-Rückstand in Form eines Post-Consumer bzw. nach Gebrauch recycelten kautschukmodifizierten Polystyrols, das Styrol-Acrylnitril-Copolymer, Acrylnitril-Butadien-Styrol-Copolymer oder eine Mischung davon umfasst, bereitgestellt werden; und
wobei eine Verbrennung von 100 Gewichtsteilen der Zusammensetzung in Luft 0,1 bis 3 Gewichtsteile Asche erzeugt; wobei die Menge des polymerisierten Acrylnitril-Rückstands durch die in der vorliegenden Beschreibung offenbarte ¹³C-NMR-Methode bestimmt wird und der Aschegehalt durch Verbrennung in Luft bei 600 °C für zwei Stunden, wie in der vorliegenden Beschreibung beschrieben, bestimmt wird.

2. Zusammensetzung nach Anspruch 1, umfassend mindestens 30 Gewichtsprozent des Post-Consumer recycelten kautschukmodifizierten Polystyrols.

3. Zusammensetzung nach irgendeinem von Anspruch 1 oder 2, wobei das kautschukmodifizierte Polystyrol 80 bis 96 Gewichtsprozent Polystyrol und 4 bis 20 Gewichtsprozent Polybutadien, bezogen auf das Gewicht des kautschukmodifizierten Polystyrols, umfasst.

4. Zusammensetzung nach irgendeinem der Ansprüche 1-3, wobei der Poly(phenylenether) neuen Poly(phenylenether) umfasst.

5. Zusammensetzung nach irgendeinem der Ansprüche 1-4, wobei der Poly(phenylenether) ein gewichtsmittleres Molekulargewicht von weniger als oder gleich 55.000 atomaren Masseneinheiten aufweist.

6. Zusammensetzung nach irgendeinem der Ansprüche 1-5, ferner umfassend 0,06 bis 1,5 Gewichtsprozent Titan.

7. Zusammensetzung nach irgendeinem der Ansprüche 1-6, ferner umfassend 0,1 bis 1 Gewichtsprozent Polypropylen.

8. Zusammensetzung nach irgendeinem der Ansprüche 1-7, ferner umfassend 0,5 bis 5 Gewichtsprozent eines Polystyrol-Polybutadien-Polystyrol-Triblock-Copolymers.

9. Zusammensetzung nach Anspruch 1, wobei der Poly(phenylenether) einen Poly(2,6-dimethyl-1,4-phenylenether) umfasst; wobei die Zusammensetzung 34 bis 40 Gewichtsprozent des Poly(phenylenethers) umfasst; wobei der Poly(phenylenether) eine intrinsische Viskosität von 0,25 bis 0,35 Deziliter pro Gramm, gemessen bei 25 °C in Chloroform, aufweist; wobei das kautschukmodifizierte Polystyrol 80 bis 96 Gewichtsprozent Polystyrol und 4 bis 20 Gewichtsprozent Polybutadien, bezogen auf das Gewicht des kautschukmodifizierten Polystyrols, umfasst; wobei die Zusammensetzung 40 bis 47 Gewichtsprozent des kautschukmodifizierten Polystyrols umfasst; wobei die Zusammensetzung 14 bis 19 Gewichtsprozent des Organophosphatesters umfasst; und wobei die Zusammensetzung 0,06 bis 3 Gewichtsprozent Titan umfasst.

10. Zusammensetzung nach Anspruch 1, wobei der Poly(phenylenether) einen Poly(2,6-dimethyl-1,4-phenylenether) umfasst; wobei die Zusammensetzung 40 bis 46 Gewichtsprozent des Poly(phenylenethers) umfasst; wobei der Poly(phenylenether) eine intrinsische Viskosität von 0,25 bis 0,35 Deziliter pro Gramm, gemessen bei 25 °C in Chloroform, aufweist; wobei das kautschukmodifizierte Polystyrol 8o bis 96 Gewichtsprozent Polystyrol und 4 bis 20 Gewichtsprozent Polybutadien, bezogen auf das Gewicht des kautschukmodifizierten Polystyrols, umfasst; wobei die Zusammensetzung 30 bis 36 Gewichtsprozent des kautschukmodifizierten Polystyrols umfasst; wobei die Zusammensetzung 15 bis 19 Gewichtsprozent des Organophosphatesters umfasst; wobei die Zusammensetzung 0,06 bis 3 Gewichtsprozent Titan umfasst; und wobei die Zusammensetzung weiterhin 0,5 bis 4 Gewichtsprozent eines Polystyrol-Polybutadien-Polystyrol-Triblock-Copolymers umfasst.

11. Gegenstand, umfassend eine Zusammensetzung, umfassend
32 bis 46 Gewichtsprozent eines Poly(phenylenethers) mit einer intrinsischen Viskosität bzw. Grenzviskosität von 0,2 bis 0,35 Deziliter pro Gramm, gemessen bei 25 °C in Chloroform;
30 bis 49 Gewichtsprozent eines kautschukmodifizierten Polystyrols;
13 bis 19 Gewichtsprozent eines Organophosphatesters; und
0,2 bis 1,5 Gewichtsprozent eines polymerisierten Acrylnitril-Rückstands;
wobei das kautschukmodifizierte Polystyrol und der polymerisierte Acrylnitril-Rückstand in Form eines Post-Consumer bzw. nach Gebrauch recycelten kautschukmodifizierten Polystyrols, das Styrol-Acrylnitril-Copolymer, Acrylnitril-Butadien-Styrol-Copolymer oder eine Mischung davon umfasst, bereitgestellt werden; und wobei eine Verbrennung von 100 Gewichtsteilen der Zusammensetzung in Luft 0,1 bis 3 Gewichtsteile Asche erzeugt; wobei die Menge des polymerisierten Acrylnitril-Rückstands durch die in der vorliegenden Beschreibung offenbarte ¹³C-NMR-Methode bestimmt wird und der Aschegehalt durch Verbrennung in Luft bei 600 °C für zwei Stunden, wie in der vorliegenden Beschreibung beschrieben, bestimmt wird.

12. Gegenstand nach Anspruch 11, umfassend
eine erste Dimension von mindestens 50 Zentimetern,
eine zweite Dimension von mindestens 50 Zentimetern, und
eine dritte Dimension von weniger als oder gleich 5 Millimetern.

13. Gegenstand nach Anspruch 11 oder 12, wobei der Gegenstand eine Rückwand eines Flachbildschirmfernsehers ist.

14. Gegenstand nach irgendeinem der Ansprüche 11-13, wobei der Poly(phenylenether) einen Poly(2,6-dimethyl-1,4-phenylenether) umfasst; wobei die Zusammensetzung 34 bis 40 Gewichtsprozent des Poly(phenylenethers) umfasst; wobei der Poly(phenylenether) eine intrinsische Viskosität von 0,25 bis 0,35 Deziliter pro Gramm, gemessen bei 25 °C in Chloroform, aufweist; wobei das kautschukmodifizierte Polystyrol 80 bis 96 Gewichtsprozent Polystyrol und 4 bis 20 Gewichtsprozent Polybutadien, bezogen auf das Gewicht des kautschukmodifizierten Polystyrols, umfasst; wobei die Zusammensetzung 40 bis 47 Gewichtsprozent des kautschukmodifizierten Polystyrols umfasst; wobei die Zusammensetzung 14 bis 19 Gewichtsprozent des Organophosphatesters umfasst; und wobei die Zusammensetzung 0,06 bis 3 Gewichtsprozent Titan umfasst.

15. Gegenstand nach irgendeinem der Ansprüche 11-13, wobei der Poly(phenylenether) einen Poly(2,6-dimethyl-1,4-phenylenether) umfasst; wobei die Zusammensetzung 40 bis 46 Gewichtsprozent des Poly(phenylenethers) umfasst; wobei der Poly(phenylenether) eine intrinsische Viskosität von 0,25 bis 0,35 Deziliter pro Gramm, gemessen bei 25 °C in Chloroform, aufweist; wobei das kautschukmodifizierte Polystyrol 80 bis 96 Gewichtsprozent Polystyrol und 4 bis 20 Gewichtsprozent Polybutadien, bezogen auf das Gewicht des kautschukmodifizierten Polystyrols, umfasst; wobei die Zusammensetzung 30 bis 36 Gewichtsprozent des kautschukmodifizierten Polystyrols umfasst; wobei die Zusammensetzung 15 bis 19 Gewichtsprozent des Organophosphatesters umfasst; wobei die Zusammensetzung 0,06 bis 3 Gewichtsprozent Titan umfasst; und wobei die Zusammensetzung weiterhin 0,5 bis 4 Gewichtsprozent eines Polystyrol-Polybutadien-Polystyrol-Triblock-Copolymers umfasst.

## Revendications

1. Composition comprenant :
32 à 46 pourcents en poids d'un poly(phénylène éther) ayant une viscosité intrinsèque de 0,2 à 0,35 décilitre par gramme, mesurée à 25 °C dans le chloroforme ;
30 à 49 pourcents en poids d'un polystyrène modifié par du caoutchouc ;
13 à 19 pourcents en poids d'un ester organophosphate ; et
0,2 à 1,5 pourcents en poids d'un résidu acrylonitrile polymérisé ;
dans laquelle le polystyrène modifié par du caoutchouc et le résidu acrylonitrile polymérisé sont fournis sous la forme d'un polystyrène modifié par du caoutchouc recyclé post-consommateur comprenant un copolymère styrène-acrylonitrile, un copolymère acrylonitrile-butadiène-styrène, ou un mélange de ceux-ci ; et
dans laquelle la combustion de 100 parties en poids de la composition dans l'air produit 0,1 à 3 parties en poids de cendres ; dans laquelle la quantité du résidu acrylonitrile polymérisé est déterminée par la méthode RMN ¹³C décrite dans la description de la présente invention, et la teneur en cendres est déterminée par une combustion dans l'air à 600 °C pendant deux heures, comme décrit dans la description de la présente invention.

2. Composition selon la revendication 1, comprenant au moins 30 pourcents en poids du polystyrène modifié par du caoutchouc recyclé post-consommateur.

3. Composition selon l'une des revendications 1 ou 2, dans laquelle le polystyrène modifié par du caoutchouc comprend 80 à 96 pourcents en poids de polystyrène et 4 à 20 pourcents en poids de polybutadiène, par rapport au poids du polystyrène modifié par du caoutchouc.

4. Composition selon l'une des revendications 1 à 3, dans laquelle le poly(phénylène éther) comprend du poly(phénylène éther) vierge.

5. Composition selon l'une des revendications 1 à 4, dans laquelle le poly(phénylène éther) a une masse moléculaire moyenne massique inférieure ou égale à 55 000 unités de masse atomique.

6. Composition selon l'une des revendications 1 à 5, comprenant en outre 0,06 à 1,5 pourcents en poids de titane.

7. Composition selon l'une des revendications 1 à 6, comprenant en outre 0,1 à 1 pourcent en poids de polypropylène.

8. Composition selon l'une des revendications 1 à 7, comprenant en outre 0,5 à 5 pourcents en poids d'un copolymère tribloc polystyrène-polybutadiène-polystyrène.

9. Composition selon la revendication 1,
dans laquelle le poly(phénylène éther) comprend un poly(2,6-diméthyl-1,4-phénylène éther) ;
dans laquelle la composition comprend 34 à 40 pourcents en poids du poly(phénylène éther) ;
dans laquelle le poly(phénylène éther) a une viscosité intrinsèque de 0,25 à 0,35 décilitre par gramme, mesurée à 25 °C dans le chloroforme ;
dans laquelle le polystyrène modifié par du caoutchouc comprend 80 à 96 pourcents en poids de polystyrène et 4 à 20 pourcents en poids de polybutadiène, par rapport au poids du polystyrène modifié par du caoutchouc ;
dans laquelle la composition comprend 40 à 47 pourcents en poids du polystyrène modifié par du caoutchouc ;
dans laquelle la composition comprend 14 à 19 pourcents en poids de l'ester organophosphate ; et
dans laquelle la composition comprend 0,06 à 3 pourcents en poids de titane.

10. Composition selon la revendication 1,
dans laquelle le poly(phénylène éther) comprend un poly(2,6-diméthyl-1,4-phénylène éther) ;
dans laquelle la composition comprend 40 à 46 pourcents en poids du poly(phénylène éther) ;
dans laquelle le poly(phénylène éther) a une viscosité intrinsèque de 0,25 à 0,35 décilitre par gramme, mesurée à 25 °C dans le chloroforme ;
dans laquelle le polystyrène modifié par du caoutchouc comprend 80 à 96 pourcents en poids de polystyrène et 4 à 20 pourcents en poids de polybutadiène, par rapport au poids du polystyrène modifié par du caoutchouc ;
dans laquelle la composition comprend 30 à 36 pourcents en poids du polystyrène modifié par du caoutchouc ;
dans laquelle la composition comprend 15 à 19 pourcents en poids de l'ester organophosphate ;
dans laquelle la composition comprend 0,06 à 3 pourcents en poids de titane ; et
dans laquelle la composition comprend en outre 0,5 à 4 pourcents en poids d'un copolymère tribloc polystyrène-polybutadiène-polystyrène.

11. Article comprenant une composition comprenant :
32 à 46 pourcents en poids d'un poly(phénylène éther) ayant une viscosité intrinsèque de 0,2 à 0,35 décilitre par gramme, mesurée à 25 °C dans le chloroforme ;
30 à 49 pourcents en poids d'un polystyrène modifié par du caoutchouc ;
13 à 19 pourcents en poids d'un ester organophosphate ; et
0,2 à 1,5 pourcents en poids d'un résidu acrylonitrile polymérisé ;
dans laquelle le polystyrène modifié par du caoutchouc et le résidu acrylonitrile polymérisé sont fournis sous la forme d'un polystyrène modifié par du caoutchouc recyclé post-consommateur comprenant un copolymère styrène-acrylonitrile, un copolymère acrylonitrile-butadiène-styrène, ou un mélange de ceux-ci ; et
dans laquelle la combustion de 100 parties en poids de la composition dans l'air produit 0,1 à 3 parties en poids de cendres ; dans laquelle la quantité du résidu acrylonitrile polymérisé est déterminée par la méthode RMN-¹³C décrite dans la description de la présente invention, et la teneur en cendres est déterminée par une combustion dans l'air à 600 °C pendant deux heures, comme décrit dans la description de la présente invention.

12. Article selon la revendication 11, présentant
une première dimension d'au moins 50 centimètres,
une deuxième dimension d'au moins 50 centimètres, et
une troisième dimension inférieure ou égale à 5 millimètres.

13. Article selon la revendication 11 ou 12, l'article étant un panneau arrière d'un téléviseur à écran plat.

14. Article selon l'une des revendications 11 à 13,
dans lequel le poly(phénylène éther) comprend un poly(2,6-diméthyl-1,4-phénylène éther) ;
dans lequel la composition comprend 34 à 40 pourcents en poids du poly(phénylène éther) ;
dans lequel le poly(phénylène éther) a une viscosité intrinsèque de 0,25 à 0,35 décilitre par gramme, mesurée à 25 °C dans le chloroforme ;
dans lequel le polystyrène modifié par du caoutchouc comprend 80 à 96 pourcents en poids de polystyrène et 4 à 20 pourcents en poids de polybutadiène, par rapport au poids du polystyrène modifié par du caoutchouc ;
dans lequel la composition comprend 40 à 47 pourcents en poids du polystyrène modifié par du caoutchouc ;
dans lequel la composition comprend 14 à 19 pourcents en poids de l'ester organophosphate ; et
dans lequel la composition comprend 0,06 à 3 pourcents en poids de titane.

15. Article selon l'une des revendications 11 à 13,
dans lequel le poly(phénylène éther) comprend un poly(2,6-diméthyl-1,4-phénylène éther) ;
dans lequel la composition comprend 40 à 46 pourcents en poids du poly(phénylène éther) ;
dans lequel le poly(phénylène éther) a une viscosité intrinsèque de 0,25 à 0,35 décilitre par gramme, mesurée à 25 °C dans le chloroforme ;
dans lequel le polystyrène modifié par du caoutchouc comprend 80 à 96 pourcents en poids de polystyrène et 4 à 20 pourcents en poids de polybutadiène, par rapport au poids du polystyrène modifié par du caoutchouc ;
dans lequel la composition comprend 30 à 36 pourcents en poids du polystyrène modifié par du caoutchouc ;
dans lequel la composition comprend 15 à 19 pourcents en poids de l'ester organophosphate ;
dans lequel la composition comprend 0,06 à 3 pourcents en poids de titane ; et
dans lequel la composition comprend en outre 0,5 à 4 pourcents en poids d'un copolymère tribloc polystyrène-polybutadiène-polystyrène.
